(19) **Europäisches Patentamt / European Patent Office / Office européen des brevets**

(11) **EP 2 854 459 A1**

(12) # EUROPEAN PATENT APPLICATION

(43) Date of publication:
**01.04.2015 Bulletin 2015/14**

(51) Int Cl.:
**H04W 52/24** (2009.01)    **H04W 52/32** (2009.01)

(21) Application number: **13306321.4**

(22) Date of filing: **26.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Wong, Shin Horng**
  **Swindon, Wiltshire SN5 7DJ (GB)**

• **Baker, Matthew**
  **Swindon, Wiltshire SN5 7DJ (GB)**

(74) Representative: **Coghlan, Judith Elizabeth Kensy et al**
**Script IP Limited**
**Turnpike House**
**18 Bridge Street**
**Frome BA11 1BB (GB)**

(54) **Power control**

(57)    Aspects relate to a method of controlling uplink channel transmit power in a wireless communications network and an uplink pilot channel power control message generating method; and network nodes and computer program products operable to perform those methods. The method of controlling uplink channel transmit power in a wireless communications network comprises: transmitting a first uplink pilot channel; and transmitting a physical uplink channel configured to operate as a virtual uplink pilot channel; receiving at least one transmit power control message from a base station in relation to the first uplink pilot channel; receiving at least one transmit power control message from another base station in relation to the virtual uplink pilot channel; controlling transmit power of the first uplink pilot channel and the virtual uplink pilot channel independently in dependence upon their respective received power control messages; and setting transmit power of at least one physical uplink channel with reference to transmit power of the first uplink pilot channel; and setting transmit power of at least one further physical uplink channel with reference to transmit power of the virtual uplink pilot channel. Aspects and embodiments allow a second pilot scenario to be introduced to network functionality in appropriate circumstances by allowing for reuse of an existing uplink channel as a secondary pilot, thus avoiding a requirement to introduce a separate new pilot which could increase user equipment complexity.

Legend:
- LPN1 coverage
- LPN2 coverage
- Macro cell coverage
- LPN1 CRE region
- LPN2 CRE region
- LPN1 Extended SHO region
- LPN2 Extended SHO region

FIG. 2

**Description**

FIELD OF THE INVENTION

Aspects and embodiments relate to a method of controlling uplink channel transmit power in a wireless communications network and an uplink pilot channel power control message generating method; and network nodes and computer program products operable to perform those methods.

BACKGROUND

Wireless telecommunications networks are known. In such networks, mobile communication devices (for example, mobile telephones) are operable to communicate with base stations provided by network providers.

In known wireless telecommunications networks, radio coverage is provided to mobile communication devices including mobile telephones and wireless devices such as tablets, in areas known as cells. Typically, a base station is located in each cell to provide radio coverage. Mobile connectible devices in each cell are operable to receive information and data from a base station and to transmit information and data to a base station.

Network connectible devices roam through a region covered by a wireless telecommunications network. A number of such base stations are provided and are distributed geographically in order to provide a wide area of coverage to network connectible devices.

When user equipment is within an area served by a base station, communications may be established between the user equipment and the base station over associated radio links.

Traditional base stations provide coverage in relatively large geographical areas. Such regions of coverage are referred to as cells and, when supported by a traditional base station, those cells are often referred to as macro cells. It is possible to provide a heterogeneous network (HetNet) where smaller sized cells are provided within a coverage region known as a macro cell. These smaller sized cells may be referred to as micro cells, pico cells or femto cells. Such smaller sized cells are often supported by low power nodes (LPN).

One way to establish a small cell is to provide a small cell base station that provides coverage which has a relatively limited range within the coverage area of a macro cell. The transmission power of a small cell base station is relatively low and, thus, each small cell base station typically provides a relatively small coverage area compared to that of a macro base station. Small cells may be provided in, for example, an office or a home.

Small cells are also provided where communications coverage provided by a macro cell is poor, or where a user wishes to use an alternative communications link provided locally to communicate with the core network and/ or to increase capacity within a network.

Deployment of small cells in a wireless communications network can assist a network provider in relation to handling capacity in high traffic areas; for example, so-called "hot spot" areas. An ability to offload traffic to a small cell or cells located in a high traffic area of a network may be particularly useful to a network operator.

Although HetNet deployments may offer advantages, unexpected consequences of such deployments may occur. It is desired to address those consequences.

SUMMARY

According to a first aspect, there is provided a method of controlling uplink channel transmit power in a wireless communications network; the method comprising: transmitting a first uplink pilot channel; and transmitting a physical uplink channel configured to operate as a virtual uplink pilot channel; receiving at least one transmit power control message from a base station in relation to the first uplink pilot channel; receiving at least one transmit power control message from another base station in relation to the virtual uplink pilot channel; controlling transmit power of the first uplink pilot channel and the virtual uplink pilot channel independently in dependence upon their respective received power control messages; and setting transmit power of at least one physical uplink channel with reference to transmit power of the first uplink pilot channel; and setting transmit power of at least one further physical uplink channel with reference to transmit power of the virtual uplink pilot channel.

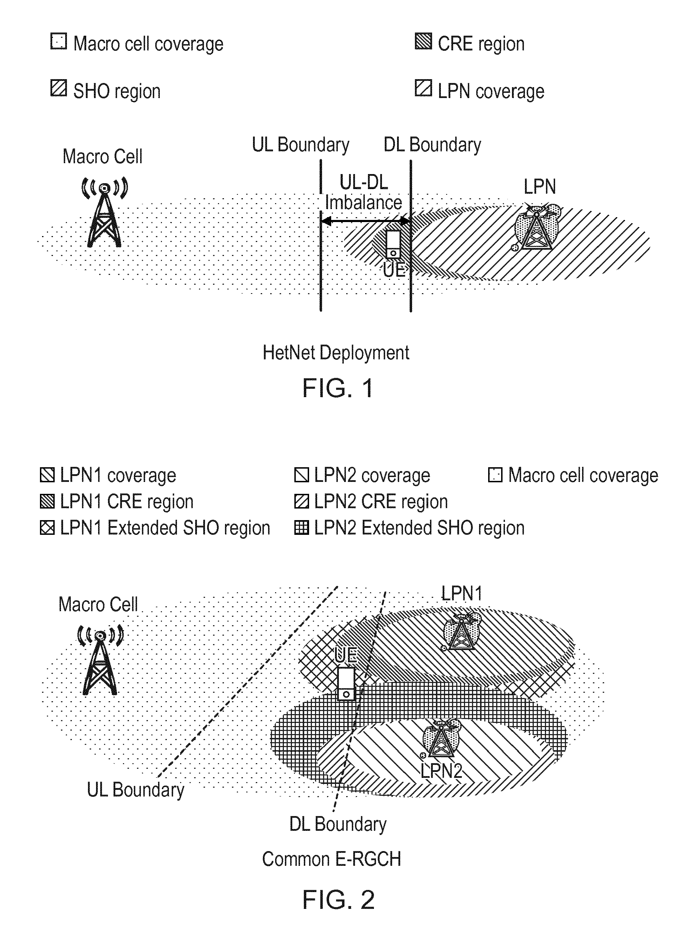

The first aspect recognises that in a HetNet deployment such as that illustrated in Figure 1 which shows a macro cell and a small cell, an uplink (UL) boundary exists where a user equipment (UE) uplink path loss to the macro cell and to the small cell base station are the same. A downlink (DL) boundary is defined as being where the received pilot power from a macro cell base station and the received pilot power from the small cell base station are the same at the user equipment. Typically, in a homogeneous network (a macro cell only deployment, for example) the uplink and downlink boundaries are located at substantially the same position. However, in a HetNet deployment, such as that illustrated in Figure 1, a small cell base station typically has a lower transmit power than that of a macro base station. As a result, the uplink and downlink boundaries are no longer co-located. The region between the uplink and downlink boundary is referred to as the uplink-downlink imbalance region (UL-DL imbalance region). In some networks, a network operator may try to ensure user equipment preferentially selects connection to a small cell by implementing a cell range expansion region (CRE). That region is shown in Figure 1. In that region, user equipment may be configured to apply a bias in relation to a pilot signal power received from the small cell base station such that connection to the small cell is deemed beneficial by the user equipment.

User equipment in the UL-DL imbalance region which is connected to the macro cell base station (as shown in Figure 1) is likely to cause strong interference to the small cell. Such a scenario is applicable in both LTE and UMTS radio access technologies. In a UMTS network that strong uplink interference is likely to occur unless the user equipment is operating in a soft handover mode (SHO).

When operating according to a soft handover regime, transmissions made by a user equipment may be received and understood by both a serving cell and one or more non-serving cells. However, when in a soft handover mode, downlink data communications are still only sent to user equipment by a serving cell. In other words, there is no "downlink soft handover".

The first aspect recognises that inner loop power control (ILPC) methods which are implemented when user equipment is operating in soft handover are such that user equipment operates to increase pilot (DPCCH) transmit power only if the transmit power control messaging received from all cells (both serving and non-serving) is determined to a power-up instruction. If user equipment determines that there is at least one transmit power control signal which requests power down, the user equipment is operable to power down its uplink pilot (DPCCH) power. Such a method takes into account that as long as the uplink messaging sent by user equipment can successfully be received by one of the serving and non-serving cells then operation of the user equipment may be substantially unaffected.

In a homogeneous network, where the uplink and downlink boundaries are substantially coincident, feedback messaging relating to downlink transmissions being sent by the user equipment to a serving base station is likely to be safely received by the serving cell even when the user equipment is being requested to reduce its pilot transmission power. In a HetNet , the first aspect recognises that downlink feedback information may no longer reach the serving cell if such a power control scheme is implemented.

The first aspect also recognises that traditional operation of user equipment is such that the pilot power (DPCCH) is used as a reference in relation to other physical uplink channels. That is to say, the transmit power of other physical channels is typically implemented as an offset to that of the pilot power. As a result, control of the pilot power serves to successfully control uplink transmission power in relation to other physical uplink channels.

Aspects and embodiments recognise that in a HetNet deployment user equipment may be in a soft handover region and operating such that a serving cell is a macro cell and a non-serving cell is a small cell supported by a low power node. If the soft handover region resides in an uplink-downlink imbalance zone, it is likely that user equipment uplink signals will be received more strongly at the low power node compared to reception signal strength at the macro base station. As a consequence, the low power node is likely to dominate existing inner loop power control methods requesting that the user equipment power down its uplink pilot (DPCCH). In such a scenario, the essential uplink control information (and downlink feedback information) such as HS-DPCCH and scheduling information (SI) which are decoded only by the serving cell (or macro cell in this case) are received at a very poor signal strength by the serving cell, thus detrimentally affecting operation of the user equipment within the network.

It is possible to implement a method of power control in which two "pilots" are transmitted by user equipment. One pilot can be used as a reference for uplink channels of importance to the serving cell, and one pilot can be used in relation to channels which can be successfully received by non-serving cells. That is to say, a second uplink pilot can be provided which can be used as a reference for uplink control information and scheduling information, and a second pilot may be used in relation to calculation of transmit power for other physical channels. Aspects and embodiments recognise that it can be wasteful to implement a completely new second pilot and that it is possible to use some uplink channels which already exist as a "virtual pilot".

In one embodiment, control of transmit power of the first uplink pilot channel is performed independently from control of transmit power of the virtual uplink pilot channel. Accordingly, transmit power of different physical channels can be controlled separately. Aspects and embodiments operate to divide physical uplink channels into at least two sets such that each set of physical uplink channels transmitted by the user equipment use a different inner loop power control pilot and reference pilot channel. For example, aspects and embodiments may provide that, for example, a first set of physical channels are configured such that they use a "legacy" pilot (for example, DPCCH) as their reference pilot for inner loop power control whilst a second set of physical channels may be configured to use a virtual pilot "V-DPCCH" as the reference pilot for their inner loop power control. Each set of physical channels may respond to power control commands received from two different network nodes in dependence on which pilot signal is being utilised by those network nodes.

In one embodiment, the physical uplink channel configured to operate as a virtual uplink pilot channel comprises a physical uplink channel having a primary use other than that of a virtual pilot channel. Accordingly, rather than implementing a completely new "secondary pilot", a virtual pilot in accordance with aspects and embodiments does not require an additional physical channel. The virtual pilot, which may comprise one or more appropriately chosen existing channels, may be such that it is used for power control by, for example, non-serving cells supported by the another base station.

In one embodiment, one of the base station and the another base station comprises: a serving base station. In one embodiment, one of the base station and the another base station comprises: a non-serving cell operating to support soft handover in relation to at least one of the physical uplink channels. Accordingly, the method may be of particular use in non-homogeneous networks in which uplink and downlink boundaries are not coincident. In particular, the method of the first aspect may be useful in a HetNet. The method may be suited to a user equipment operating in a Soft Handover region of a network, in which downlink and uplink techniques to ensure communication between user equipment and a network have asymmetric properties. In one embodiment, the base station and the another base station comprise: at least one macro base station and at least one low power node. Accordingly, a method in accordance with the first aspect maybe suited to operation in a HetNet.

In one embodiment, at least one physical uplink channel which has its transmit power set with reference to transmit power of the first uplink pilot channel comprises a channel including downlink feedback information, and the control of transmit power of the first uplink pilot channel is performed in dependence upon received power control messages from the base station performing the downlink. In one embodiment, the at least one physical uplink channel which has its transmit power set with reference to transmit power of the virtual uplink pilot channel comprises a data carrying channel, and the control of transmit power of said virtual uplink pilot channel is performed in dependence upon received power control messages from the another base station configured to receive the data carrying channel. Accordingly, in some embodiments, a non-serving cell supported by, for example, a low power node, may be operable to use the quality of data channels, such as, for example, E-DPCCH, to determine the amount of power required for a "virtual pilot" or V-DPCCH. Non-serving cells (for example, those supported by low power nodes) which participate in a second power control loop are operable such that they use the quality of, for example, the received E-DPCCH and ignore to all intents and purposes the pilot or DPCCH traditionally used. As a result, decisions regarding a transmit power control instruction of some channels, be it up or down, can be based upon the quality of the E-DPCCH and not that of the DPCCH. According to one embodiment, the set of physical channels which are power controlled by a secondary pilot may comprise E-DPCCH and E-DPDCH physical channels. In some embodiments, a first set of channels including, for example, remaining physical channels such as DPCCH and HS-DPCCH may be power controlled in relation to received quality of a primary pilot or DPCCH.

In one embodiment, method comprises: receiving an indication that control of uplink channel transmit power is to be performed using the first uplink pilot channel and the virtual uplink pilot channel. Accordingly, in some embodiments an appropriate layer 1 message (for example, an HS-SCCH order) can be utilized to switch user equipment power control behaviour from typical behaviour to use of multiple pilots in relation to different physical channel sets. That is to say, user equipment may be operable to switch behaviour from following the standard behaviour, in which it only increases transmit power if there are no requests to reduce transmit power, to a modified behaviour.

That modified behavior of user equipment may depend on the particular implementation chosen. In one embodiment, a first set of physical channels (for example, DPCCH and HS-DPCCH) may be operable to essentially follow transmit power control commands from one base station. That base station may support the serving cell for the downlink and may, for example, typically comprise a macro base station. Accordingly, transmit power of channels containing downlink feedback messages and other similar important functional information in relation to the downlink may be controlled by the cell transmitting that information. A second set of physical channels (for example, E-DPCCH and E-DPDCH) may be operable to follow transmit power control commands from another base station in relation to the virtual pilot channel. That another base station may, for example, comprise a low power node. Accordingly, the cell, or cells, which receive the uplink data and messaging may control the uplink transmit power of those physical channels.

In one embodiment, the indication comprises: an indication of identity of the at least one base station and the another base station. In one embodiment, the indication comprises: an indication of an association between the physical uplink channels and the first uplink pilot channel and the virtual uplink pilot channel. Accordingly, when triggering operation of a multiple pilot power control method, the order initiating such a method may be such that it includes an indication of which of the cells in an active set (ie, which non-serving cells) may be operable to control inner loop power control for each non-primary set. Similarly, in some embodiments such information may have already been preconfigured by means of RRC signalling to user equipment.

A second aspect provides a computer program product operable, when executed on a computer, to perform the method of the first aspect.

A third aspect provides user equipment configured to control uplink channel transmit power in a wireless communications network; the user equipment comprising: transmission logic operable to transmit a first uplink pilot channel and a physical uplink channel configured to operate as a virtual uplink pilot channel; reception logic operable to receive at least one transmit power control message from a base station in relation to the first uplink pilot channel and at least one transmit power control message from another base station in relation to the virtual uplink pilot channel; control logic operable to control transmit power of the first uplink pilot channel and the virtual uplink pilot channel independently in dependence upon their respective received power control messages; and power setting logic operable to set transmit power of at least one physical uplink channel with reference to transmit power of the first uplink pilot channel; and set transmit power of at least one further physical uplink channel with reference to transmit power of the virtual uplink pilot channel.

In one embodiment, said control logic is operable to control transmit power of the first uplink pilot channel independently from control of transmit power of the virtual uplink pilot channel.

In one embodiment, the physical uplink channel configured to operate as a virtual uplink pilot channel comprises a physical uplink channel having a primary use other than that of a virtual pilot channel.

In one embodiment, one of the base station and the another base station comprises: a serving base station.

In one embodiment, one of the base station and the another base station comprises: a non-serving cell operating to support soft handover in relation to at least one of the physical uplink channels.

In one embodiment, the base station and the another base station comprise: at least one macro base station and at least one low power node.

In one embodiment, at least one physical uplink channel which has its transmit power set with reference to transmit power of the first uplink pilot channel comprises a channel including downlink feedback information, and the control of transmit power of the first uplink pilot channel is performed in dependence upon received power control messages from the base station performing the downlink.

In one embodiment, the at least one physical uplink channel which has its transmit power set with reference to transmit power of the virtual uplink pilot channel comprises a data carrying channel, and the control of transmit power of said virtual uplink pilot channel is performed in dependence upon received power control messages from the another base station configured to receive the data carrying channel.

In one embodiment, the user equipment comprises trigger logic operable to receive an indication that control of uplink channel transmit power is to be performed using the first uplink pilot channel and the virtual uplink pilot channel.

In one embodiment, the indication comprises: an indication of identity of the at least one base station and the another base station.

In one embodiment, the indication comprises: an indication of an association between the physical uplink channels and the first uplink pilot channel and the virtual uplink pilot channel.

A fourth aspect provides an uplink pilot channel power control message generating method for use in a wireless communications network; the method comprising: receiving a physical uplink channel configured to operate as a virtual uplink pilot channel from user equipment; generating a transmit power control message based upon reception quality of the virtual uplink pilot channel; and transmitting the transmit power control message to the user equipment.

A fifth aspect provides a computer program product operable, when executed on a computer, to perform the method of the fourth aspect.

A sixth aspect provides a base station operable to generate an uplink pilot channel power control message in a wireless communications network; the base station comprising: reception logic operable to receive a physical uplink channel configured to operate as a virtual uplink pilot channel from user equipment; message generation logic operable to generate a transmit power control message based upon reception quality of the virtual uplink pilot channel; and transmission logic operable to transmit said transmit power control message to said user equipment.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates user equipment in an uplink-downlink imbalance region of a HetNet; and
Figure 2 illustrates schematically an example of user equipment in a soft handover region of a HetNet operating such that a macro base station supports the serving cell and two low power nodes support non-serving cells.

DESCRIPTION OF THE EMBODIMENTS

Overview

Before discussing the embodiments in any more detail, first an overview will be provided. Aspects and embodiments operate to divide physical uplink channels into two sets such that each set of physical uplink channels transmitted by the user equipment use a different inner loop power control pilot and reference channel. For example, aspects and embodiments may provide that, for example, a first set of physical channels are configured such that they use a "legacy" pilot (for example, DPCCH) as their reference pilot for inner loop power control whilst a second set of physical channels may be configured to use a virtual pilot "V-DPCCH" as the reference pilot for their inner loop power control. Each set of physical channels may respond to power control commands received from two different network nodes in dependence on which pilot signal is being utilised by those network nodes.

In some embodiments a new order, for example, a layer 1 trigger message, such as an HS-SCCH message, may be introduced to allow user equipment to switch between inner loop power control methods. That is to say, a trigger may be introduced such that user equipment switches from a normal mode of power control to operation in a mode in which power control of subsets of physical channels is split between the two pilot signals.

Rather than implementing a completely new "secondary pilot", a virtual pilot in accordance with aspects and embodiments does not require an additional physical channel. The virtual pilot, which may comprise one or more appropriately chosen existing channels, may be such that it is used for power control by non-serving cells. In some embodiments, it will be appreciated that such non-serving cells will comprise one or more low power nodes in a HetNet deployment.

In some embodiments a virtual pilot gain factor $\beta_{vc}(t)$ at time $t$, is given by a function of the DPCCH gain factor $\beta_c$ (as defined in Equation 1 below). The amount of transmit power control power gain $\Delta_{TPC}(t)$ (in linear) is indicated by F-DPCH from the low power nodes participating in inner loop power control in relation to a second set of physical channels. Therefore, in linear terms:

$$\beta_{vc}\left(t\right)=\beta_c \times \prod_{j=1}^{j=t}\Delta_{TPC}\left(j\right)$$

*Equation 1*

It will be appreciated that transmit power control steps may be signalled to user equipment in dB, or in increments, or that $\Delta_{TPC}(t)$ is expressed in accordance with Equation 1 as a linear expression.

According to one embodiment, a non-serving cell supported by, for example, a low power node may be operable to use the quality of the data and associated channels, such as, for example, E-DPCCH, to determine the amount of power required for a "virtual pilot" or V-DPCCH. It will be appreciated that V-DPCCH does not itself exist physically and that re-use of existing channels may offer a sensible route forward. Non-serving cells (for example, those supported by low power nodes) which participate in a second power control loop are operable such that they use the quality of, for example, the received E-DPCCH and ignore to all intents and purposes the pilot or DPCCH traditionally used. As a result, decisions regarding a transmit power control instruction of some channels, be it up or down, can be based upon the quality of the E-DPCCH and not that of the DPCCH.

According to one embodiment, the set of physical channels which are power controlled by a secondary pilot may comprise E-DPCCH and E-DPDCH physical channels. In some embodiments, a first set of channels including, for example, remaining physical channels such as DPCCH and HS-DPCCH may be power controlled in relation to received quality of a primary pilot or DPCCH.

In terms of implementing such a multi-pilot arrangement, according to some embodiments an appropriate layer 1 message (for example, an HS-SCCH order) can be utilized to switch user equipment power control behaviour from typical behaviour to use of multiple pilots in relation to different physical channel sets. That is to say, user equipment may be operable to switch behaviour from following the standard behaviour, in which it only increases transmit power if there are no requests to reduce transmit power, to a modified behaviour. That modified behaviour may depend on the particular implementation chosen. In one embodiment, a first set of physical channels (for example, DPCCH and HS-DPCCH) may be operable to follow transmit power control commands from one cell. That cell may comprise the serving cell for the downlink and may, for example, typically comprise a macro cell. Accordingly, transmit power of channels containing downlink feedback messages and other similar important functional information in relation to the downlink may be controlled by the cell transmitting that information. A second set of physical channels (for example, E-DPCCH and E-DPDCH) may be operable to follow transmit power control commands from another cell; for example, a cell supported by a low power node. Accordingly, the cell, or cells, which receive the uplink data and messaging may control the uplink transmit power of those physical channels.

In some embodiments, a first set of physical channels (for example, DPCCH and HS-DPCCH) may be operable such that transmit power control commands from one cell are followed. Those transmit power control commands may originate from a serving cell for the downlink; for example, as sent by a macro cell. Similarly, a second set of physical channels (for example, E-DPCCH and E-DPDCH) may be operable to follow a standard transmit power control command rule applied to transmit power control commands received from all cells at the user equipment.

Aspects and embodiments allow for various implementations. In particular, the total number of physical channel sets may be greater than two. The total number of cells from which transmit power control commands are received may also be greater than two. It will be appreciated that the number of cells from which transmit power control commands can be received may be greater than or equal to the number of sets into which uplink channels are grouped for the purposes of transmit power control commands. Furthermore, if the number of cells from which transmit power commands are received is greater than the number of sets into which the uplink channels are grouped, an appropriate "or of the downs" rule may be used to combine transmit power control commands from at least two of the cells prior to using the combined commands to control the transmission power of one of the physical channel sets.

When triggering operation of a multiple pilot power control method, the order initiating such a method may be such that it includes an indication of which of the cells in an active set (ie, which non-serving cells) may be operable to control inner loop power control for each non-primary set. Similarly, in some embodiments such information may have already been preconfigured by means of RRC signalling to user equipment.

According to some aspects and embodiments, it is the quality of a virtual pilot (V-DPCCH) which is used and in some embodiments that virtual pilot may be based on the quality of E-DPCCH. As a result, when use of a two pilot power control method is initiated and a second set of physical channels is activated, according to some embodiments it can be determined that the E-DPCCH power gain factor $\beta_{ec}(t)$ at time $t$ is given as a function of the virtual pilot, namely:

$$\beta_{ec}(t) = A_{ec}\beta_{vc}(t) = \beta_{ec}(0) \times \prod_{j=1}^{j=t} \Delta_{TPC}(j)$$

*Equation 2*

Where, $A_{ec}$ is the RRC signalled E-DPCCH amplitude gain ratio and the gain factor, $\beta_{ec}(0)$ is $A_{ec}\,\beta_c$.

That is to say, according to some embodiments user equipment may be operable to increase E-DPCCH power based on transmit power control commands received from a low power node. It will be appreciated that the serving grant for E-DCH is relative to the V-DPCCH power rather than that of the legacy pilot DPCCH. Therefore, the gain factor for E-DPDCH $\beta_{ed}(t)$ at time $t$ can be given by:

$$\beta_{ed}(t) = A_{ed}\beta_{vc}(t) = \frac{A_{ed}\beta_{ec}(t)}{A_{ec}}$$

*Equation 3*

It can be seen from Equation 3 that the serving grant and E-DPDCH power may be a function solely of the power of E-DPCCH.

According to some embodiments, non-serving cells involved in controlling power of a second set of physical uplink channels can be updated via RRC signaling during an active set update. Such an implementation may allow a layer 1 message such as an HS-SCCH order to comprise a simple on/ off indication to allow the user equipment to be aware of which uplink power control mechanism to use.

Figure 2 illustrates schematically user equipment in a soft handover region operating in soft handover with a macro cell as its serving cell and small cells supported by LPN1 and LPN2 as non-serving cells.

As illustrated in Figure 2, user equipment may be operable to perform standard inner loop power control. That is to say, all physical channels use one pilot as a reference. In the example shown in Figure 2, the DPCCH is used as a reference for all physical channels.

At some point, it is determined by the serving macro cell that it is experiencing poor HS-DPCCH signal quality from the user equipment. That serving macro cell may be operable to send an HS-SCCH order instructing the user equipment to split the uplink physical channels into two sets such that E-DPCCH and E-DPDCH use a separate inner loop power control method based on transmit power command controls received by the user equipment from the low power nodes. In this embodiment the order also indicates that LPN1 and LPN2 are participating in the supplementary inner loop power control method.

Once initiated, the new power control method operates such that the macro cell performs inner loop power control on the DPCCH transmitted by the user equipment and brings it back to a suitable quality such the macro cell can reliably receive HS-DPCCH.

Meanwhile, LPN1 and LPN2 base their transmit power control commands upon the quality of received E-DPCCH and are operable to issue transmit power control commands to the user equipment via F-DPCH. The user equipment is operable to interpret such transmit power control commands from the low power nodes as per a legacy method. That is to say, the user equipment may increase the E-DPCCH power only if all LPNs issue a transmit power control up message. Otherwise, it decreases E-DPCCH power if any decrease request is received. In the embodiments shown, the serving grant for a second set of physical channels can be based on the ratio of the E-DPDCH power and E-DPCCH power.

In the embodiments shown, a macro cell may be operable to increase the power of the DPCCH, whilst the low power nodes may operate to reduce the power of the E-DPCCH without affecting standard pilot power. Such an implementation can eventually lead to an equilibrium power allocation. It will be appreciated that it is possible that the power of the E-DPCCH can be lower than that of the standard pilot (DPCCH) and there may not be any need to perform power boosting on the E-DPCCH if the DPCCH has sufficient power to provide reliable channel estimates for decoding the E-DPDCH. Aspects and embodiments allow a macro serving cell to receive HS-DPCCH reliably when user equipment is operating in soft handover with at least one low power node. Aspects and embodiments allow a second pilot scenario to be introduced without introduction of a separate new pilot which could increase user equipment complexity.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of controlling uplink channel transmit power in a wireless communications network; said method comprising:

     transmitting a first uplink pilot channel; and
     transmitting a physical uplink channel configured to operate as a virtual uplink pilot channel;
     receiving at least one transmit power control message from a base station in relation to said first uplink pilot channel;
     receiving at least one transmit power control message from another base station in relation to said virtual uplink pilot channel;
     controlling transmit power of said first uplink pilot channel and said virtual uplink pilot channel in dependence upon their respective received power control messages; and
     setting transmit power of at least one physical uplink channel with reference to transmit power of said first uplink pilot channel;
     and setting transmit power of at least one further physical uplink channel with reference to transmit power of said virtual uplink pilot channel.

2. A method according to claim 1, wherein control of transmit power of said first uplink pilot channel is performed independently from control of transmit power of said virtual uplink pilot channel.

3. A method according to claim 1 or claim 2, wherein said physical uplink channel configured to operate as a virtual uplink pilot channel comprises a physical uplink channel having a primary use other than that of a virtual pilot channel.

4. A method according to any preceding claim, wherein one of said base station and said another base station comprises: a serving base station.

5. A method according to any preceding claim, wherein one of said base station and said another base station comprises a non-serving cell operating to support soft handover in relation to at least one of said physical uplink channels.

6. A method according to any preceding claim, wherein said base and said another base station comprise: at least one macro base station and at least one low power node.

7. A method according to any preceding claim, wherein said at least one physical uplink channel which has its transmit power set with reference to transmit power of said first uplink pilot channel comprises a channel including downlink feedback information, and said control of transmit power of said first uplink pilot channel is performed in dependence upon received power control messages from said base station performing said downlink.

8. A method according to any preceding claim, wherein said at least one physical uplink channel which has its transmit power set with reference to transmit power of said virtual uplink pilot channel comprises a data carrying channel, and said control of transmit power of said virtual uplink pilot channel is performed in dependence upon received power control messages from said another base station configured to receive said data carrying channel.

9. A method according to any preceding claim, wherein said method comprises:

   receiving an indication that control of uplink channel transmit power is to be performed using said first uplink pilot channel and said virtual uplink pilot channel.

10. A method according to claim 9, wherein said indication comprises an indication of identity of said at least one base station and said another base station.

11. A method according to claim 9 or claim 10, wherein said indication comprises an indication of an association between said physical uplink channels and said first uplink pilot channel and said virtual uplink pilot channel.

12. User equipment configured to control uplink channel transmit power in a wireless communications network; said user equipment comprising:

   transmission logic operable to transmit a first uplink pilot channel and a physical uplink channel configured to operate as a virtual uplink pilot channel;
   reception logic operable to receive at least one transmit power control message from a base station in relation to said first uplink pilot channel and at least one transmit power control message from another base station in relation to said virtual uplink pilot channel;
   control logic operable to control transmit power of said first uplink pilot channel and said virtual uplink pilot channel in dependence upon their respective received power control messages; and
   power setting logic operable to set transmit power of at least one physical uplink channel with reference to transmit power of said first uplink pilot channel; and set transmit power of at least one further physical uplink channel with reference to transmit power of said virtual uplink pilot channel.

13. An uplink pilot channel power control message generating method for use in a wireless communications network; said method comprising:

   receiving a physical uplink channel configured to operate as a virtual uplink pilot channel from user equipment;
   generating a transmit power control message based upon reception quality of said virtual uplink pilot channel; and
   transmitting said transmit power control message to said user equipment.

14. A base station operable to generate an uplink pilot channel power control message in a wireless communications network; said base station comprising:

   reception logic operable to receive a physical uplink channel configured to operate as a virtual uplink pilot channel from user equipment;
   message generation logic operable to generate a transmit power control message based upon reception quality of said virtual uplink pilot channel; and
   transmission logic operable to transmit said transmit power control message to said user equipment.

15. A computer program product operable, when executed on a computer, to perform the method of any one of claims 1 to 11 or claim 13.

☐ Macro cell coverage          ▨ CRE region

▨ SHO region                   ▨ LPN coverage

Macro Cell          UL Boundary    DL Boundary

((•))          UL-DL                    LPN
               Imbalance
                              UE

HetNet Deployment

FIG. 1


▨ LPN1 coverage          ▨ LPN2 coverage          ☐ Macro cell coverage
▨ LPN1 CRE region        ▨ LPN2 CRE region
⊠ LPN1 Extended SHO region   ⊞ LPN2 Extended SHO region

Macro Cell                              LPN1

((•))
                    UE

                              LPN2

UL Boundary

        DL Boundary
Common E-RGCH

FIG. 2

Europäisches
Patentamt

European
Patent Office

Office européen
des brevets

**EUROPEAN SEARCH REPORT**

Application Number

EP 13 30 6321

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/025144 A1 (ERICSSON TELEFON AB L M [SE]; ANTO ARAM [SE]; JOENGREN GEORGE [SE]; SO) 21 February 2013 (2013-02-21) * figures 11,12,14 * * paragraph [0001] - paragraph [0020] * * paragraph [0108] - paragraph [0113] * * paragraph [0121] - paragraph [0124] * ----- | 1-15 | INV. H04W52/24 H04W52/32 |
| X | HUAWEI ET AL: "HS-DPCCH reliability in co-channel interference scenario", 3GPP DRAFT; R1-131483 HS-DPCCH RELIABILITY IN CO-CHANNEL INTERFERENCE SCENARIO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG1, no. Chicago, USA; 20130415 - 20130419 6 April 2013 (2013-04-06), XP050697289, Retrieved from the Internet: URL:http://www.3gpp.org/ftp/tsg_ran/WG1_RL 1/TSGR1_72b/Docs/ [retrieved on 2013-04-06] * chapter 3.3 * ----- | 1-15 | |
| X | WO 2007/146891 A2 (QUALCOMM INC [US]; GOROKHOV ALEXEI [US]; KHANDEKAR AAMOD [US]; KADOUS) 21 December 2007 (2007-12-21) * figures 3,4 * * paragraph [0037] - paragraph [0082] * ----- | 1-15 | TECHNICAL FIELDS SEARCHED (IPC) H04W |

The present search report has been drawn up for all claims

| Place of search | Date of completion of the search | Examiner |
|---|---|---|
| The Hague | 18 November 2013 | Boetzel, Ulrich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 30 6321

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2013

| Patent document cited in search report | Publication date | Patent family member(s) | Publication date |
|---|---|---|---|
| WO 2013025144 A1 | 21-02-2013 | NONE | |
| WO 2007146891 A2 | 21-12-2007 | BR PI0712765 A2 | 25-09-2012 |
| | | CA 2652862 A1 | 21-12-2007 |
| | | CA 2810296 A1 | 21-12-2007 |
| | | CN 101578773 A | 11-11-2009 |
| | | CN 102970739 A | 13-03-2013 |
| | | EP 2057756 A2 | 13-05-2009 |
| | | EP 2582066 A1 | 17-04-2013 |
| | | JP 5313321 B2 | 09-10-2013 |
| | | JP 2009540766 A | 19-11-2009 |
| | | JP 2012090280 A | 10-05-2012 |
| | | KR 20090033218 A | 01-04-2009 |
| | | RU 2009100844 A | 20-07-2010 |
| | | TW 200818744 A | 16-04-2008 |
| | | TW 201115951 A | 01-05-2011 |
| | | US 2008014979 A1 | 17-01-2008 |
| | | US 2012224502 A1 | 06-09-2012 |
| | | WO 2007146891 A2 | 21-12-2007 |

EPO FORM P0459

For more details about this annex : see Official Journal of the European Patent Office, No. 12/82